# EUROPÄISCHE PATENTSCHRIFT

(11) **EP 1 067 281 B1**
(45) Veröffentlichungstag und Bekanntmachung des Hinweises auf die Patenterteilung: **12.02.2003**
(21) Anmeldenummer: 00112363.7
(22) Anmeldetag: 09.06.2000
(51) Int. Cl.: F02B 31/08, F02B 17/00, F02B 37/00, F02B 29/04

(54) **Fremdgezündete Hubkolbenbrennkraftmaschine**
Spark ignited reciprocating piston engine
Moteur à combustion à allumage commandé et à pistons alternatifs

(30) Priorität: 09.07.1999 DE 19932119
(43) Veröffentlichungstag der Anmeldung: 10.01.2001
(73) Patentinhaber: DaimlerChrysler AG, 70567 Stuttgart (DE)
(72) Erfinder: Fledersbacher, Peter, 70619 Stuttgart (DE); Sumser, Siegfried, 70184 Stuttgart (DE); Wirbeleit, Friedrich, Dr., 73733 Esslingen (DE)

(56) Entgegenhaltungen:
- EP-A- 0 879 941
- EP-A- 0 879 943

## Beschreibung

Die Erfindung betrifft eine fremdgezündete Hubkolbenbrennkraftmaschine nach dem Oberbegriff des Anspruchs 1.

Ziele der Brennkraftmaschinen-Entwicklungen sind nach wie vor, den Kraftstoffverbrauch zu senken und Abgas- und Geräuschemissionen zu reduzieren. Als qualitätsgeregelte Brennkraftmaschine stellt der Dieselmotor das zur Zeit verbrauchsgünstigste Motorkonzept dar, jedoch werden auch beim fremdgezündeten Ottomotor die Entwicklungsarbeiten mit gesteigerter Intensität vorangetrieben, weil er in Bezug auf eine Partikel- und Geräuschemission sowie der hohen spezifischen Leistung und der Kraftstoffherstellung gegenüber dem Dieselmotor Vorteile bietet.

Da zur Zündung des Ottokraftstoffs zum Zündzeitpunkt an der Zündkerze ein zündfähiges Kraftstoffluftgemisch vorliegen muß, wird in der Regel dem Brennraum ein homogenes stöchiometrisches oder fettes Kraftstoffluftgemisch zugeführt, dessen Menge im Teillastbereich der Brennkraftmaschine durch Drosselung reduziert wird. Durch die Drosselverluste ist der Kraftstoffverbrauch bei der Quantitätsregelung bei Ottomotoren deutlich höher als bei der Qualitätsregelung bei Dieselmotoren die mit mageren Kraftstoffluftgemischen betrieben werden. Um sowohl hohe Drehmomentwerte und Leistungswerte als auch einen geringen Teillastverbrauch bei fremdgezündeten Ottomotoren zu erreichen, wird innerhalb des Motorenkennfelds ein Mixbetrieb in der Art realisiert, daß im oberen Drehzahlbereich und Lastbereich ein homogenes stöchiometrisches Luftverhältnis vorliegt und im mittleren und unteren Drehzahlbereich und Lastbereich ein Schichtladebetrieb mit einer weitgehend ungedrosselten Luftzufuhr möglich ist.

Um ein homogenes Kraftstoffluftgemisch zu erreichen, wird bereits sehr früh, und zwar noch während des Saughubs des Hubkolbens Kraftstoff direkt in den Brennraum der Hubkolbenbrennkraftmaschine eingespritzt. Dadurch wird die angesaugte Luftmenge gut ausgenutzt und ein hoher Mitteldruck und damit ein hoher Drehmomentwert erreicht. Bei Teillast wird durch Ladungsschichtung eine Qualitätsregelung ermöglicht, indem der Kraftstoff während des Kompressionshubs des Hubkolbens erst sehr spät in den Brennraum eingespritzt wird.

In der Praxis werden Fahrzeugmotoren aus Komfortgründen im wesentlichen im Teillastbereich betrieben. Deshalb sollte der Kennfeldbereich für die wesentlichen Fahrzustände durch den Kennfeldbereich mit einer verbrauchsgünstigen Ladungsschichtung übereinstimmen. Es bestehen jedoch technische Gründe, die den Betrieb mit Schichtladung der Brennkraftmaschine im Kennfeld begrenzen. So ergibt sich beispielsweise ab einem mittleren indizierten Druck von ca. 4 bar eine zunehmende Emission an Rußpartikeln, da für die größeren Kraftstoffmassen dann die Zeit für eine vollständige Verdampfung nicht mehr ausreicht. Deshalb ist der nutzbare Schichtladebereich mit möglichst spätem Einspritzende des Kraftstoffs durch eine entsprechende Last begrenzt. Ferner sind hohe Abgasrückführungsraten notwendig, um die Stickoxyd-Rohemissionen zu senken. Dies führt wiederum zu einer erhöhten Schwärzung bzw. einer erhöhten Kohlenwasserstoffemission und einem Verbrauchsanstieg.

Bei Brennverfahren für Hubkolbenbrennkraftmaschinen mit Benzindirekteinspritzung unterscheidet man zwischen drei Grundmustern, nämlich einem strahlgeführten Verfahren, einem wandgeführten Verfahren und einem luftgeführten Verfahren. Je nach Verfahren sind die Eigenschaften des Kraftstoffstrahls, die Brennraumgeometrie und die Ladungsbewegung wichtige Einflußgrößen.

Ein strahlgeführtes Verfahren ist durch die enge räumliche Zuordnung der Kraftstoffeinspritzvorrichtung und der Zündkerzen gekennzeichnet. Die über die Kraftstoffeinspritzvorrichtung in den Brennraum eingespritzte Kraftstoffwolke bildet eine kompakte Zone aus, in die verwirbelte Luft begrenzt eingemischt wird. Für die Beherrschung des Schichtungsprofils muß die räumliche Anordnung von Kraftstoffeinspritzvorrichtung und Zündkerze exakt abgestimmt werden.

Beim wandgeführten Verfahren wird der Gemischbildungsvorgang durch teilweise Wandanlagerung mit daran anschließendem Abtrag, unterstützt durch die Bewegung der Zylinderladung, gesteuert. Luftgeführte Verfahren dagegen beruhen auf dem Prinzip, den eingespritzten Kraftstoff durch die Ladungsbewegung zur Zündkerze zu transportieren und dabei die Luft in die Kraftstoffwolke aktiv einzumischen. Damit wird eine Abflachung des Schichtungsprofils angestrebt, die verhindert, daß sich ausgedehnte, fette Gemischzonen ausbilden.

Für alle drei Verfahren sind die Ladungsbewegung, die Bewegung von Luft, Kraftstoff und gegebenenfalls von zurückgeführtem Abgas im Brennraum, und insbesondere eine zeitlich und räumlich richtige Turbulenzgeneration, für das Teillastverhalten wesentlich. Eine zu geringe Ladungsbewegung führt bei niedrigen Drehzahlen aufgrund einer zu geringen Relativgeschwindigkeit zwischen der Einlaßströmung und den Einspritzstrahlen zu einem unzureichenden Aufbereitungszustand des Gemischs. Daraus resultieren erhöhte Kohlenmonoxyd-, Kohlenwasserstoff- und vor allem Rußemissionen.

Aus der EP-A-0879943 ist ein fremdgezündete Brennkraftmaschine mit Direkteinspritzung bekannt, welche einen ersten und einen zweiten Ansaugkanal sowie einen ersten und einen zweiten Auslasskanal für jeden Zylinder aufweist. Am Kolbenboden ist eine kreisförmige Kolbenmulde vorgesehen, deren Mittelachse gegenüber einer Zylindermittelachse versetzt ist. Im ersten Ansaugkanal wird der Luftstrom lastabhängig durch ein Drallsteuerventil gesteuert. Der zweite Ansaugkanal ist derart ausgebildet, dass er sich im Allgemeinen tangential zum Rand der Kolbenmulde erstreckt. Im Schichtladebetrieb der Brennkraftmaschine wird das Drallsteuerventil im ersten Ansaugkanal so gesteuert, dass er den ersten Ansaugkanal verschließt. Demzufolge wird Luft nur durch den zweiten Ansaugkanal zugeführt, wodurch ein Drall in der Kolbenmulde erzielt wird. Der dabei erzeugte Drall bleibt im Brennraum während des Verdichtungstakts erhalten, so dass eine gebildete Kraftstoffwolke in Richtung der Zündkerze befördert werden kann .

Der Erfindung liegt die Aufgabe zugrunde, eine definierte Ladungsbewegung über einen breiten Drehzahlbereich bzw. Lastbereich mit einem drosselarmen Teillastbereich zu erreichen. Diese Aufgabe wird gemäß der Erfindung durch die Merkmale des Anspruchs 1 gelöst. Weitere Ausgestaltungen ergeben sich aus den Unteransprüchen.

Nach der Erfindung fördert ein Lader Ladeluft in den ersten als Drallkanal ausgebildeten Einlaßkanal, der über einen Verbindungskanal mit dem zweiten geraden Einlaßkanal verbunden ist. In dem Verbindungskanal ist eine Regeleinrichtung angeordnet, die die geförderte Ladeluft in Abhängigkeit von Betriebsparametern auf die beiden Einlaßkanäle aufteilt. Hierbei wird die Aufladung nicht nur genutzt, um die Leistung der Brennkraftmaschine anzuheben, sondern auch um die Ladungsbewegung zu intensivieren und zu steuern. Dadurch kann der Bereich des günstigen Schichtladebetriebs insbesondere zum oberen Teillastbereich hin vergrößert werden. Er deckt damit größere Bereiche der wesentlichen Fahrzustände ab.

Die Intensivierung der Ladungsbewegung führt zu einem besseren Klopfverhalten der Brennkraftmaschine. Ferner wird durch den höheren Massendurchsatz bei Teillast und damit geringerer Drosselung das dynamische Ansprechverhalten der Brennkraftmaschine gegenüber einer Brennkraftmaschine mit Saugrohreinspritzung wesentlich verbessert, da bei einer Leistungssteigerung der erhöhte Massendurchsatz unmittelbar genutzt werden kann, und nicht wie bei einer stärker gedrosselten Brennkraftmaschine erst aufgebaut werden muß. Außerdem besteht aufgrund eines ausreichenden Luftüberschusses die Möglichkeit, in der Expansionsphase des Hubkolbens eine zweite Kraftstoffeinspritzung vorzusehen, um die Abgasenergie für einen Abgasturbolader oder Katalysator in bestimmten Betriebsbereichen anzuheben. Dies verbessert ebenfalls das Ansprechverhalten der Brennkraftmaschine bzw. des Katalysators. Schließlich bewirkt der höhere Massendurchsatz eine Temperaturabsenkung im Schichtbetrieb bei fallender Last, was sich günstig auf das Temperaturprofil für einen DENOX-Katalysator auswirkt. Dies kann noch durch einen Ladeluftkühler unterstützt werden, der in der Ladeluftleitung vorgesehen ist, die vom Lader zu dem ersten Einlaßkanal führt.

Als Lader kann ein Kreiselverdichter oder volumetrischer Verdichter dienen. Diese können von einer Abgasturbine oder mechanisch von der Brennkraftmaschine über ein Getriebe oder von einem separaten Elektromotor angetrieben werden. Ferner ist es auch möglich, einen Abgasstoßwellenverdichter zu verwenden. Der Lader ist mit einer Ladeluftleitung über den Ladeluftkühler direkt mit dem ersten Einlaßkanal verbunden, wobei in der Ladeluftleitung keine Drosselklappe vorgesehen ist. Die Regelvorrichtung, die in dem Verbindungskanal zwischen dem ersten und zweiten Einlaßkanal angeordnet ist, dient nur zur Beeinflussung der Ladungsbewegung, nicht aber zu einer sonst üblichen Quantitätsregelung. Die Last der Brennkraftmaschine wird durch die Einspritzmenge pro Arbeitstakt geregelt.

Gemäß einer Ausgestaltung der Erfindung kann der zweite Einlaßkanal über eine Ansaugleitung mit der Atmosphäre verbunden sein. In der Ansaugleitung ist vor der Einmündung des Verbindungskanals ein Rückschlagventil und weiter stromaufwärts eine Drosselklappe angeordnet. Das Rückschlagventil verhindert, daß Ladeluft in Richtung des freien Rohrendes ausgeschoben wird. In der Betriebsweise mit homogener Ladung, wenn der Verbindungskanal durch die Regelvorrichtung geschlossen ist, kann die Brennkraftmaschine über die Ansaugleitung, das Rückschlagventil und die Drosselklappe durch den zweiten Einlaßkanal der Umgebung ansaugen, wobei die erforderliche Quantitätsregelung über die Drosselklappe durchgeführt wird. Der erste Einlaßkanal wird weiterhin vom Lader versorgt.

Auf die Drosselklappe und die Ansaugleitung kann verzichtet werden, wenn gemäß einer weiteren Ausgestaltung der Erfindung das Fördervolumen und/oder der Förderdruck des Laders regelbar ist. Die in einigen Kennfeldbereichen notwendige Quantitätsregelung kann dann über den Lader erfolgen. Zur Regelung des Fördervolumens bzw. des Förderdrucks ist es bei einem Abgasturboladers zweckmäßig, dessen Abgasturbine und/oder Lader mit einer variablen, verstellbaren Schaufelgeometrie zu versehen. Dabei ist es zweckmäßig, das Leitgitter der Abgasturbine und/oder des Laders variabel zu gestalten, da dieses nicht rotiert und daher einfacher zu verstellen ist.

Bei einem mechanisch von der Hubkolbenbrennkraftmaschine angetriebenen Lader kann die Drehzahl über ein stufenloses Getriebe geregelt werden. Wird der Lader von einem Elektromotor angetrieben, ist es zweckmäßig, die Drehzahl des Elektromotors entsprechend den Anforderungen zu regeln.

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerseise auch einzeln betrachten und zu sinnvollen weiteren Kombinationen zusammenfassen.

Es zeigt:

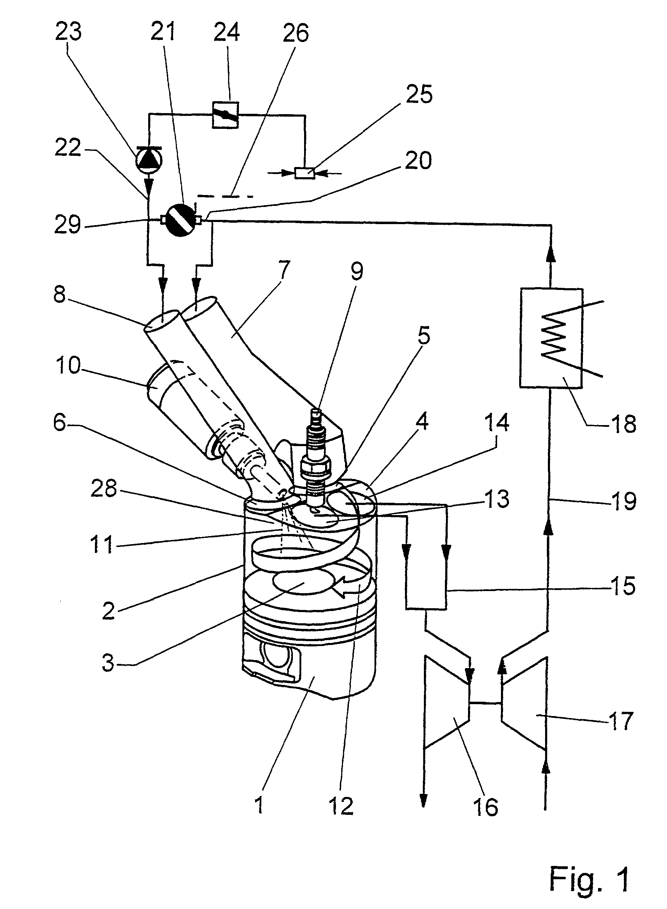

- Fig. 1: eine schematisierte, teilweise Darstellung einer erfindungsgemäßen Hubkolbenbrennkraftmaschine ,
- Fig. 2: eine Variante zu Fig. 1 und
- Fig. 3: ein Kennfeld für den üblichen Betriebsbereich.

In einem Zylinder 2 einer Brennkraftmaschine bewegt sich ein Hubkolben 1 zyklisch auf und ab. Der Zylinder 2 wird von einem Zylinderkopf 4 abgeschlossen, indem Einlaßventile 5 und 6 vorgesehen sind, an die sich separate Einlaßkanäle 7 und 8 anschließen. Im Zylinder 2 wird zwischen dem Hubkolben 1 und dem Zylinderkopf 4 ein Brennraum 28 gebildet, der eine Brennraummulde 3 einschließen kann. Diese ist im wesentlichen ungedrosselt mit dem übrigen Brennraum 28 verbunden.

Eine Kraftstoffeinspritzvorrichtung 10 spritzt den Kraftstoff in einem oder in mehreren Kraftstoffstrahlen 11 direkt in den Brennraum 28, wo er sich mit der Verbrennungsluft mischt und durch mindestens eine Zündkerze 9 gezündet wird. Die Luftbewegung bzw. die Bewegung des Kraftstoffluftgemisches trägt das Bezugszeichen 12.

Von den Einlaßkanälen 7, 8 ist ein erster 7 als Drallkanal ausgebildet. Die durch ihn in den Brennraum 28 gelangende Luft erfährt beim Durchströmen eine Drallbewegung, die im Brennraum 28 weitgehend erhalten bleibt. Der zweite Einlaßkanal 8 ist im wesentlichen gerade ausgebildet. Die durch ihn in den Brennraum 28 einströmende Luft ist im wesentlichen drallfrei.

Der Zylinderkopf 4 besitzt ferner Auslaßventile 13, 14, die über eine Abgasleitung 30 mit einer Abgasturbine 16 eines Abgasturboladers verbunden sind, die einen Lader 17 antreibt. Die vom Lader 17 geförderte Luft gelangt über eine Ladeluftleitung 19 und einen Ladeluftkühler 18 zum Einlaßkanal 7. Dieser ist über einen Verbindungskanal 20 mit dem zweiten Einlaßkanal 8 verbunden. An den zweiten Einlaßkanal 8 ist ferner eine Ansaugleitung 22 angeschlossen, in der stromaufwärts einer Einmündung 29 des Verbindungskanals 20 ein Rückschlagventil 23 in Form eines Lamellenventils vorgesehen ist, das die Rückströmung der Ladeluft zu dem freien Ende der Ansaugleitung 22 verhindert. An dem freien Ende der Ansaugleitung 22 ist ein Luftfilter 25 vorgesehen, über den Luft angesaugt wird, sobald die Regeleinrichtung 21 den Verbindungskanal zwischen dem ersten Einlaßkanal 7 und dem zweiten Einlaßkanal 8 schließt oder soweit drosselt, daß das Rückschlagventil 23 öffnet. Zum Betätigen der Regeleinrichtung ist eine Signalleitung 26 vorgesehen, die zu einer nicht näher dargestellten elektronischen Steuereinheit führt. Zwischen dem Luftfilter 25 und dem Rückschlagventil 23 ist eine Drosselklappe 24 angeordnet, die zur Quantitätsregelung dient, wenn die Verbindungsleitung 20 geschlossen ist.

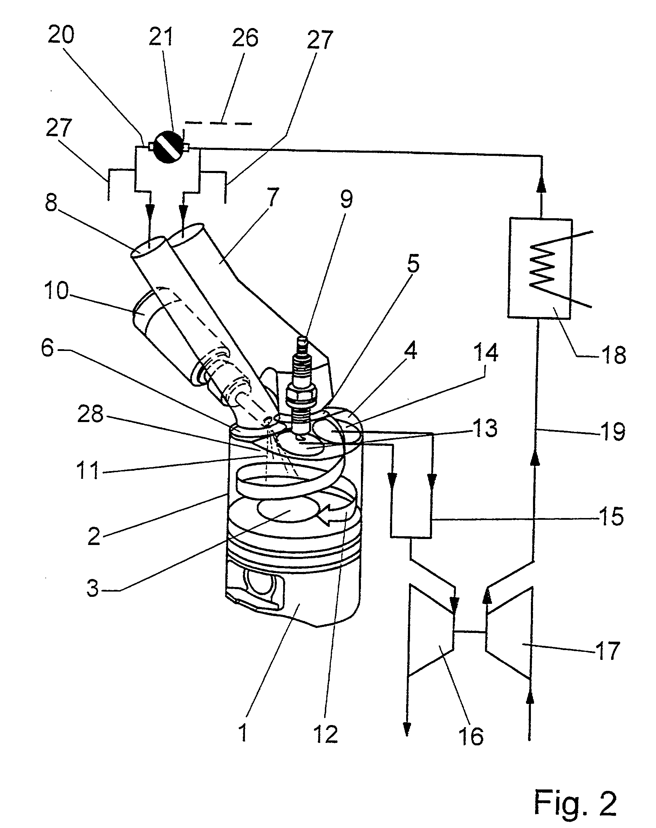

Bei der Ausführung nach Fig. 2 entfällt die Ansaugleitung 22 mit dem Rückschlagventil 23, der Drosselklappe 24 und dem Luftfilter 25. Die erforderliche Quantitätsregelung wird durch einen variablen Ladeluftstrom erreicht, indem die Abgasturbine und/oder der Lader 17 über eine variable Schaufelgeometrie verfügen, die in Abhängigkeit der Betriebsparameter verstellt wird. Zweckmäßigerweise besitzen die Leitgitter der Abgasturbine 16 bzw. des Laders 17 eine variable Schaufelgeometrie.

Anstelle des als Kreiselverdichter ausgebildeten Laders 17 kann auch ein volumetrischer Lader verwendet werden. Ferner kann der Lader 17 über ein nicht näher dargestelltes Getriebe von der Abgasturbine 16 oder von der Hubkolbenbrennkraftmaschine selbst angetrieben werden. Das Getriebe ist zweckmäßigerweise stufenlos regelbar, so daß die Drehzahl des Laders 17 und damit das Fördervolumen unabhängig von der Antriebsmaschine in Abhängigkeit der Betriebsparameter geregelt werden kann. Anstatt durch die Abgasturbine 16 kann der Laders 17 einen in der Drehzahl geregelten Elektromotor oder durch die Hubkolbenbrennkraftmaschine selbst angetrieben werden.

Die Zusammensetzung der Ladung und die Ladungsschichtung der Brennkraftmaschine kann ferner durch eine Abgasrückführung günstig beeinflußt werden. Hierzu dienen Abgasrückführleitung 27, die zu den Einlaßkanälen 7 und 8 führen.

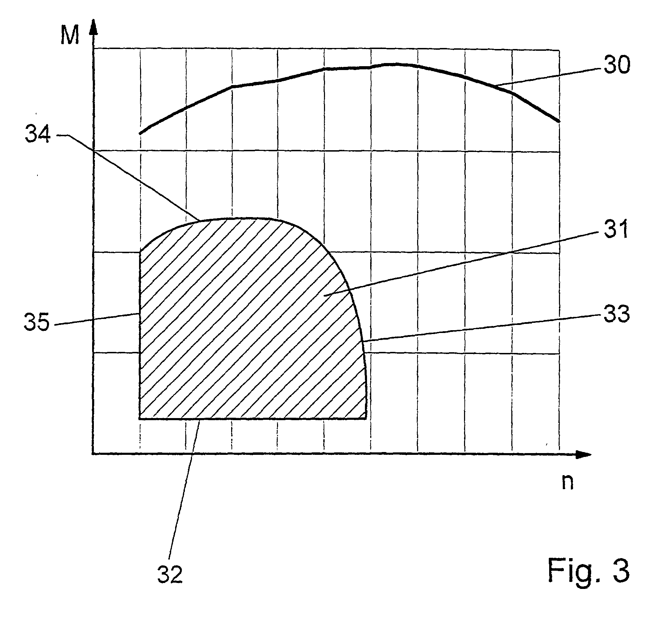

In dem Diagramm nach Fig. 3 ist das Drehmoment M der Hubkolbenbrennkraftmaschine über der Drehzahl n aufgetragen. Die Kennlinie 30 kennzeichnet das maximale Drehmoment. Ein schraffierter Bereich 31 deutet den Bereich eines möglichen, drosselarmen Schichtladebetriebs an, dessen untere Begrenzung 32 im wesentlichen durch die Abgastemperatur, die linke Begrenzung 35 durch den Antrieb der Nebenaggregate und den notwendigen Komfort, die obere Begrenzung 34 durch die Gemischbildung und Emissionen, insbesondere Ruß, und die rechte Begrenzung 33 durch die Gemischbildung und Emissionen bestimmt ist. Durch die erfindungsgemäße Gestaltung der Hubkolbenbrennkraftmaschine und die verstärkte Ladungsbewegung im Schichtladebetrieb ist es möglich, diesen Bereich auszudehnen, so daß ein größerer Bereich, der für die Praxis wesentlichen Fahrzustände erfaßt werden. Dadurch kann der durchschnittliche Kraftstoffverbrauch der Brennkraftmaschine wesentlich reduziert werden.

## Patentansprüche

1. Fremdgezündete Hubkolbenbrennkraftmaschine mit mindestens zwei Einlaßventilen je Zylindereinheit, zu denen zwei voneinander getrennte Einlaßkanäle führen, von denen der erste Einlaßkanal mit einem Drall und der zweite Einlaßkanal ohne einen Drall die Luft in einen Brennraum leitet, der in einem Zylinder zwischen einem Hubkolben und einem Zylinderkopf gebildet wird und eine Brennraummulde mit einer weitgehend ungedrosselten Verbindung zum Zylinderraum umfassen kann, und mit einer Kraftstoffeinspritzvorrichtung, die Kraftstoff direkt in den Brennraum spritzt, **dadurch gekennzeichnet, daß** ein Lader (17) Ladeluft in den ersten Einlaßkanal (7) fördert und eine Regeleinrichtung (21) in einem Verbindungskanal (20) zwischen dem ersten (7) und zweiten (8) Einlaßkanal die geförderte Ladeluft in Abhängigkeit von Betriebsparametern auf die Einlaßkanäle (7, 8) aufteilt.

2. Hubkolbenbrennkraftmaschine nach Anspruch 1 oder 2, **dadurch gekennzeichnet, daß** ein Ladeluftkühler (18) in einer Ladeluftleitung (19) vorgesehen ist, die vom Lader (17) zum ersten Einlaßkanal (7) führt.

3. Hubkolbenbrennkraftmaschine nach Anspruch 1 oder 2, **dadurch gekennzeichnet, daß** der zweite Einlaßkanal (8) über eine Ansaugleitung (22) mit der Atmosphäre verbunden ist, wobei in Strömungsrichtung vor der Einmündung (29) des Verbindungskanals (20) ein Rückschlagventil (23) und davor eine Drosselklappe (24) angeordnet ist.

4. Hubkolbenbrennkraftmaschine nach Anspruch 1 oder 2, **dadurch gekennzeichnet, daß** das Fördervolumen und/oder der Förderdruck des Laders (17) regelbar ist.

5. Hubkolbenbrennkraftmaschine nach Anspruch 4, **dadurch gekennzeichnet, daß** der Lader (17) ein Abgasturbolader ist, dessen Abgasturbine (16) und/oder Lader (17) eine variable Schaufelgeometrie besitzen.

6. Hubkolbenbrennkraftmaschine nach Anspruch 5, **dadurch gekennzeichnet, daß** die Abgasturbine (16) und/oder der Lader (17) ein variables Leitgitter besitzt.

7. Hubkolbenbrennkraftmaschine nach Anspruch 4, **dadurch gekennzeichnet, daß** der Lader (17) mechanisch von der Hubkolbenbrennkraftmaschine oder einem Elektromotor angetrieben wird, wobei die Drehzahl des Laders (17) in Abhängigkeit der Betriebsparameter regelbar ist.

8. Hubkolbenbrennkraftmaschine nach einem der vorhergehenden Ansprüche, **dadurch gekennzeichnet, daß** mindestens in einen der Einlaßkanäle (7, 8) eine Abgasrückführungsleitung (27) mündet.

## Claims

1. A spark ignition internal combustion piston engine with at least two inlet valves per cylinder unit to which lead two inlet ducts which are separated from one another, the first of these inlet ducts conducting the air into a combustion space with a swirl and the second conducting the air into a combustion space without a swirl, said combustion space being formed in a cylinder between a reciprocating piston and a cylinder head and possibly comprising a combustion space recess with a largely unthrottled connection to the cylinder space, and with a fuel injection device which injects fuel directly into the combustion space,
**characterised in that**
a charger (17) conveys charge air into the first inlet duct (7) and a regulating device (21) in a connecting duct (20) between the first (7) and the second (8) inlet duct apportions the conveyed charge air to the inlet ducts (7, 8) dependent upon operating parameters.

2. An internal combustion piston engine in accordance with claim 1 or 2,
**characterised in that**
a charge air cooler (18) is provided in a charge air line (19) which leads from the charger (17) to the first inlet duct (7).

3. An internal combustion piston engine in accordance with claim 1 or 2,
**characterised in that**
the second inlet duct (8) is connected to the atmosphere via an intake line (22), a non-return valve (23) being positioned upstream of the issue (29) of the connecting duct (20) in the direction of flow and a throttle valve (24) being positioned upstream of the said non-return valve.

4. An internal combustion piston engine in accordance with claim 1 or 2,
**characterised in that**
it is possible to regulate the feed volume and/or the feed pressure of the charger (17).

5. An internal combustion piston engine in accordance with claim 4,
**characterised in that**
the charger (17) is an exhaust gas turbocharger and that its exhaust gas turbine (16) and/or charger (17) have variable blade geometry.

6. An internal combustion piston engine in accordance with claim 5,
**characterised in that**
the exhaust gas turbine (16) and/or the charger (17) have a variable guide-blade cascade.

7. An internal combustion piston engine in accordance with claim 4,
**characterised in that**
the charger (17) is driven mechanically by the internal combustion piston engine or an electric motor, it being possible to regulate the rotational speed of the charger (17) dependent upon the operating parameters.

8. An internal combustion piston engine in accordance with one of the preceding claims,
**characterised in that**
an exhaust gas recirculation line (27) issues at least into one of the inlet ducts (7, 8).

## Revendications

1. Moteur à combustion interne à pistons alternatifs et à allumage externe, comportant au moins deux soupapes d'admission pour chaque unité de cylindre vers lesquelles mènent deux canaux d'admission séparés l'un de l'autre, dont le premier canal d'admission amène l'air avec effet rotationnel dans une chambre de combustion et le deuxième canal d'admission amène l'air sans effet rotationnel, ladite chambre étant formée dans un cylindre entre un piston alternatif et une culasse et pouvant comprendre une cavité de chambre de combustion avec une liaison largement non étranglée vers l'espace de cylindre, et comportant un dispositif injecteur de carburant qui injecte le carburant directement dans la chambre de combustion, **caractérisé en ce qu'**un compresseur (17) convoie de l'air chargé dans le premier canal d'admission (7), et un dispositif de régulation (21) dans un canal de liaison (20) entre le premier canal d'admission (7) et le deuxième canal d'admission (8) partage l'air chargé entre les canaux d'admission (7, 8) en dépendance de paramètres de fonctionnement.

2. Moteur à combustion interne à pistons alternatifs selon la revendication 1, **caractérisé en ce qu'**il est prévu un refroidisseur d'air chargé (18) dans une conduite à air chargé (19) qui mène depuis le compresseur (17) vers le premier canal d'admission (7).

3. Moteur à combustion interne à pistons alternatifs selon l'une ou l'autre des revendications 1 et 2, **caractérisé en ce que** le deuxième canal d'admission (8) est relié à l'atmosphère via une conduite d'aspiration (22), un clapet anti-retour (23) et, en avant de celui-ci, un volet d'étranglement (24) étant agencés en avant de l'embouchure (29) du canal de liaison (20), vus en direction d'écoulement.

4. Moteur à combustion interne à pistons alternatifs selon l'une ou l'autre des revendications 1 et 2, **caractérisé en ce que** le volume convoyé et/ou la pression de refoulement du compresseur (17) est réglable.

5. Moteur à combustion interne à pistons alternatifs selon la revendication 4, **caractérisé en ce que** le compresseur (17) est un turbocompresseur à gaz d'échappement dont la turbine à gaz d'échappement (16) et/ou le compresseur (17) possède des aubes à géométrie variable.

6. Moteur à combustion interne à pistons alternatifs selon la revendication 5, **caractérisé en ce que** la turbine à gaz d'échappement (16) et/ou le compresseur (17) possède une grille directrice variable.

7. Moteur à combustion interne à pistons alternatifs selon la revendication 4, **caractérisé en ce que** le compresseur (17) est entraîné mécaniquement par le moteur à combustion interne à pistons alternatifs ou par un moteur électrique, la vitesse de rotation du compresseur (17) étant réglable en dépendance des paramètres de fonctionnement.

8. Moteur à combustion interne à pistons alternatifs selon la l'une des revendications précédentes, **caractérisé en ce qu'**une conduite de retour de gaz d'échappement (27) débouche dans un au moins des canaux d'admission (7, 8).
